Europäisches Patentamt

European Patent Office

Office européen des brevets

(11) Publication number: **0 253 431 B1**

# EUROPEAN PATENT SPECIFICATION

(45) Date of publication of patent specification: **30.09.92**   (51) Int. Cl.5: **B60R  25/08**

(21) Application number: **87201252.1**

(22) Date of filing: **30.06.87**

(54) **System for preventing theft of a vehicle.**

(30) Priority: **17.07.86 NL 8601873**
      **07.11.86 NL 8602831**

(43) Date of publication of application:
    **20.01.88 Bulletin  88/03**

(45) Publication of the grant of the patent:
    **30.09.92 Bulletin  92/40**

(84) Designated Contracting States:
    **AT BE CH DE ES FR GB GR IT LI LU NL SE**

(56) References cited:
    **WO-A-85/04630        WO-A-85/04845**
    **US-A- 3 116 752      US-A- 3 625 573**
    **US-A- 3 882 959      US-A- 4 010 984**
    **US-A- 4 018 314**

(73) Proprietor: **H. van Elderen Holding B.V.**
    **IJweg 1635**
    **NL-2151 MR Nieuw Vennep(NL)**

(72) Inventor: **Splinter, Bob Cornelis**
    **Vronen 138**
    **NL-2151 PG Nieuw Vennep(NL)**

(74) Representative: **Hoijtink, Reinoud et al**
    **OCTROOIBUREAU ARNOLD & SIEDSMA**
    **Sweelinckplein 1**
    **NL-2517 GK Den Haag(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a device for preventing theft of a vehicle according to the preamble of claim 1.

Such a device is known from U.S.-A-3882959.

It is an object of the present invention to improve upon this known device, such that pressure will not stay forever in the braking device after actuation and such that easy and reliable operation of the valve is assured.

The present invention provides a device according to the characterizing part of claim 1.

Further a theft preventing device according to the present invention is compact and can easily be mounted in most existing vehicle but can also be integrated in a new vehicle.

The theft preventing system according to this invention can be operated such that the brakes are locked upon actuation of the braking pedal or treadle, but preferably the brakes are let free at actuating the locking element, because brakes of a vehicle could be hot and locking them could be damaging to e.g. the braking skid or claw. If a thief actuates the braking pedal, the brakes are immediately locked and the vehicle can not be moved any more.

Preferably, as could be requested by inspection services of some countries, there should not stay pressure in the braking system after actuation forever, and so the non-return valve should be seated and sealed, such that after e.g. 4 or 24 hours most of the overpressure in the braking elements at the wheels has ceased to exist.

The theft preventing system according to the present invention can be operated from inside the passenger cabin of a vehicle directly by means of a key, when the housing is mounted e.g. through the bottom of the vehicle to brake fluidum lines, or can be operated indirectly by means of hydraulic, pneumatic or electronic means.

Brake fluidum comprises liquids, such as oil and water, as well as gas, such as pressurized air.

Prior art

From US-A-3.116.752 it is known to mount in an automobile means for blocking the passage of brake fluidum by means of a key. However the system disclosed therein is not very compact and not versatile such that it can be operated by means of a cilinder lock, or by hydraulic, pneumatic or electro-mechanical means.

WO-A-85/04630 describes a system for locking the brake lines of a vehicle in which a system is described, provided with balls retained by a spring. By rotating the balls from their seating, the passage of brake fluidum is inhibited. The balls make actuation of the system heavy. This system is also not very versatile and it is not possible to only actuate the braking elements at the wheels of a vehicle after locking of the system has taken place.

Further there is known from WO-A-85/04845 a rather complicated system for operating of locking brake elements under environmental temperature variations.

Further details, advantages and characteristics of the present invention will become clear from the following description referring to the accompanied drawings, in which are showing:

fig. 1 a diagrammatical view of a theft preventing system of the present invention;

fig. 2 detail II of fig. 1;

fig. 3 an alternative embodiment of detail II of fig. 1;

fig. 4 a plan view, partly broken away, of the embodiment of fig. 3;

fig. 5 an exploded view of another alternative preferred embodiment of detail II of fig. 1;

fig. 6 a section through the embodiment of fig. 5;

fig. 7 and 8 diagrammatically detailed views of the functioning of the embodiment of fig. 6;

fig. 9 a section of another alternative preferred embodiment of the present invention, which can be operated by means of hydraulic pressure; and

fig. 10 an elevation, partly broken away of alternative means to operate the embodiment of fig. 9.

Throughout the drawings the same or corresponding parts are designated with the same reference numerals.

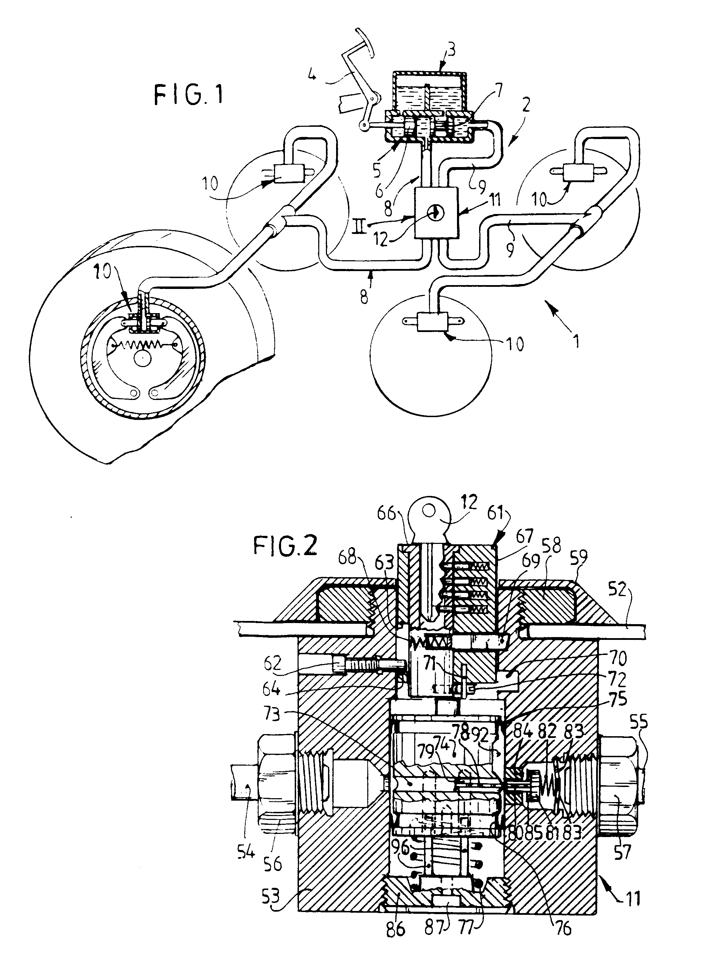

A vehicle 1 (fig. 1) is provided with a braking system 2 comprising a tank 3 of brake fluidum, e.g. oil, a braking treadle 4, a brake main cylinder 5 coupled through pistons 6, 7 and lines 8, 9 respectively for brake fluidum to wheel brake cylinders 10 and blocking means 11 operatable e.g. by a key 12.

The key 12 (fig. 2) suited for the cylinder lock 61 as is available e.g. from ZEISS®, is capable of rotating a bushing 66 within a bushing 67, while bushing 67 is slidable downwardly after pin 69 has been relieved against the force of a spring 68. The movement of bushing 67 is limited by shoulders 63, 64 resp. therein, that make contact with a screwable bar 62. At turning the key 12 and pushing downwardly the bushing 67 pin 69 will fall within notch 70, in that position keeping a piston 74 down. Rotation of bushing 66 is limited by means of a screwbolt 72 which is stopped by pin 71 in the locking position.

In piston 74 there is provided a bore or channel 73 in which a counterpin 79 provided with grooves 78, is pressed, to contact a stem 80 of a valve in a brake fluidum line 54-55. Sliding of the piston 74 is guided by means of guiding elements 96, while an upwardly directed force in the locking position is provided by the spring 77 for eventually unlocking the system. Spring 77 is retained in a cap 86 screwable into housing 53 by means of a tool to be inserted in opening 87. The ends of the brake fluidum lines 54-55 are screw fastened into the housing 53 by means of nuts 56, 57 respectively. The housing 53 is fastened to a plate 52, e.g. the bottom of an automobile, by means of a nut 58 covered by a cap 59 of rubber or synthetic material.

Between stem 80 provided with grooves and valve part 81 a seal 85 is provided for sealing against a seat 84. The sealing needs only to hold against the pressures in the braking elements, e.g. more than 100 bar, for a few hours or e.g. 24 hours. At the backside of valve part 81 there is provided a spring 82 retained against a cup 83. When piston 74 is moved downwardly stem 80 of the valve is urged by spring 82 into space 92 between de piston and the housing 53. If the braking treadle has been pushed before actuation with key 12, the braking elements at the wheels are now closed. If the treadle has not been pushed, before actuation with aid of key 12, pushing of the treadle later will allow braking fluid to go round piston 74 to open valve part 81 and lock the bracks therewith. There is provided a play between piston 74 and housing 53 and the space therebetween is sealed by means of sealings 75, 76 respectively.

It will be almost impossible, when piston 74 or housing 53 has been molested, to again provide a leak free passage between de lines 54 and 55.

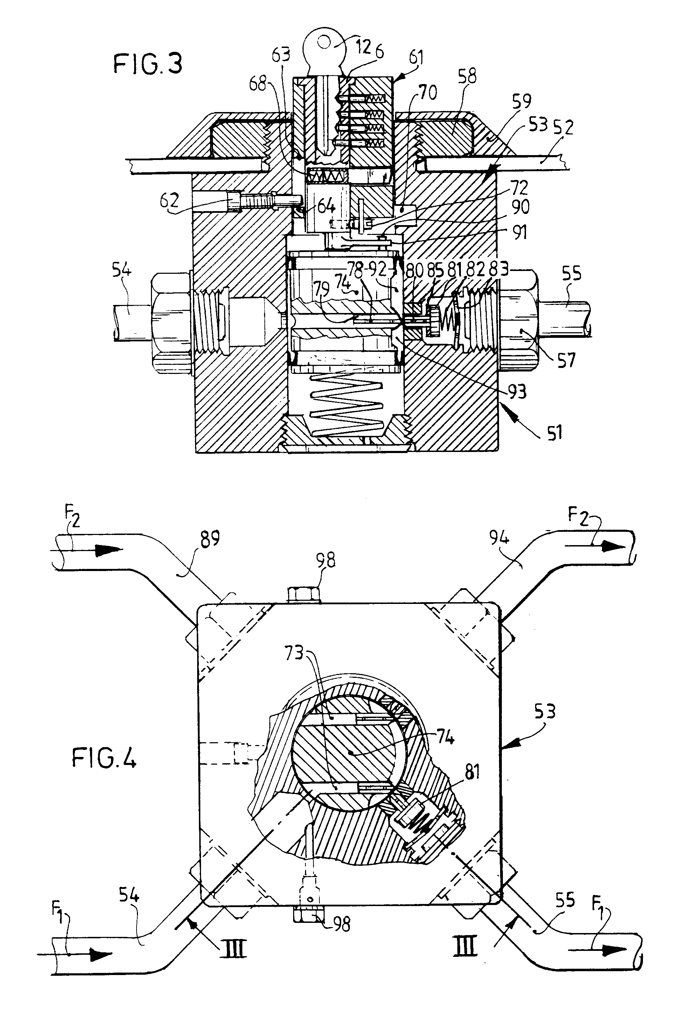

At the embodiment of fig. 3 this last mentioned feature is even more clear. By means of a turning carrier 91 contacting a projection 90 of piston 74, this piston is also rotated, no standing guiding elements being present at the underside of this piston.

Also this piston 74 is provided with a space 93 below pin 79, so that it will practically be impossible to position piston 74 in the right way, after lock 61 has been molested.

Preferably, four brake fluid lines 54, 55, 89, 94 respectively (fig. 4) are connected to one housing 53, while piston 74 is provided with two bores of channels 73. So in fig.4 there are two separate flows of fluidum $F_1$, $F_2$ respectively. Also the housing 53 is provided with elements 98 for letting out air if present in the brake fluidum, in this case oil.

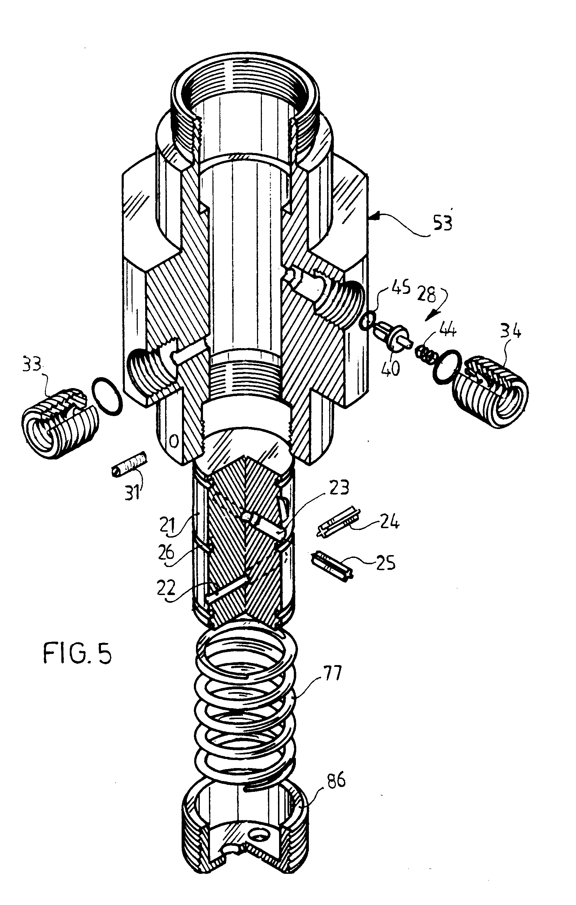

At the preferred embodiment of the present invention (fig. 5) a piston 21 is provided with two preferably crossing channels or bores 22, 23 resp., wherein pins 24, 25 resp. will be pressed. By means of a sealing (not shown) to be received in groove 26 will isolate bore 21 from bore 23, such that isolated parts of the braking system will stay isolated one from the other, when provided with the theft preventing system of this invention.

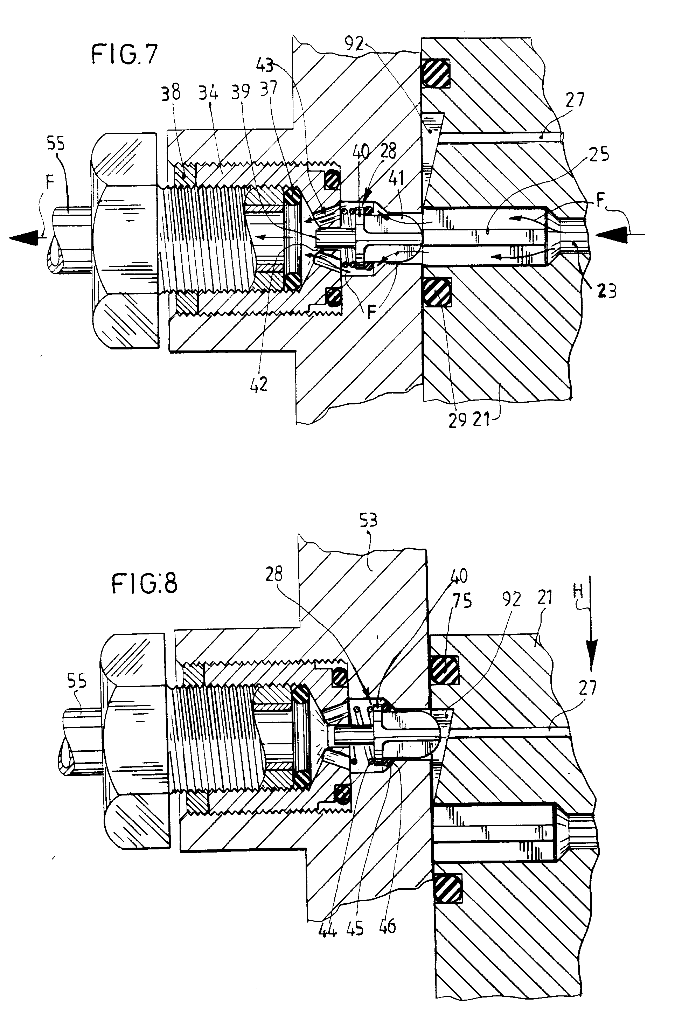

Preferably (fig. 6) piston 21 is also provided with bores or channels 27 and 28 for easy operation of valve assembly 28 in the lock position.

Seal 29 is provided in groove 26. Guiding and limitation of the actual movement of piston 21, induced by key 12 of the lock as designated with 61, takes place by means of cooperation between slot 30 and screwbolt 31 provided with sealing 32. Connections of lines 54, 55 are easily embodied in screwable plugs 33, 34, so that replacement of such connections can easily take place by seizing those plugs at 35, 36 resp. with a suitable tool. Brake fluidum line 55 is screw fastened and sealed by means of seal 37 (fig. 7) into plug 34 on which in this case a nut 38 is screw fastened. Valve 28 consists of a stem 39, a valve member 40 and second valve member 41. First stem 39 is received in an opening 42 around which are provided openings 43 in plug 34 to allow brake fluidum to pass (arrows F).

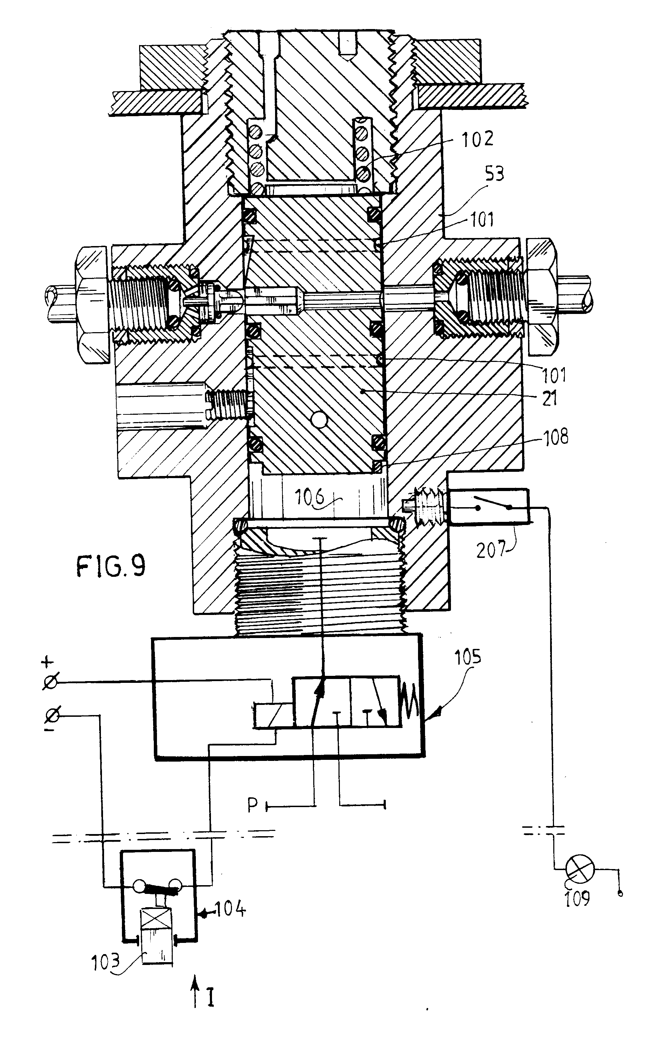

When the theft preventing system is locked (fig. 8) and piston 21 is moved according to arrow H valve 28 is moved by means of spring 44 and valve member 40 is sealed by means of seal 45 against seat 46 in housing 53. The sealing is such, that a small amount of leakage occurs, such that the high pressure within line 55 will cease to exist after a predetermined amount of time, depending on the seat and sealing.

As will be clear the piston 21 as described is operatable directly by means of a key and a lock, but can also be operated on distance, e.g. from the dashboard of an automobile by means of a key or electronic card or code. A diagrammatic embodiment of the operation of a piston 21 - in this case provided with grooves 101 instead of bores for easy operation of the valves 20 in locked position - see fig. 9 is operated under fluidum pressure, e.g. the oil pressure of the engine of an automobile, or pressurized air from a compressor, from below the piston 21 against the force of a spring 102. When e.g. a code card 103 has been inserted according to arrow I into a slot device 104 switching valve 105 is actuated and pressure P is connected to chamber 106 under piston 21. Also there is provided in housing 53 a switch 207 which will be operated by a magnetic element 108 at the underside of piston 21, such as to switch on control lamp 109 on the dashboard, so as to warn the user of the automobile that the theft preventing system is not yet unclosed. In this embodiment housing 53 will be mounted close to the main brake cylinder under the motorhood of an automobile and this hood can be provided with a switch which automatically locks the theft preventing system at opening the hood.

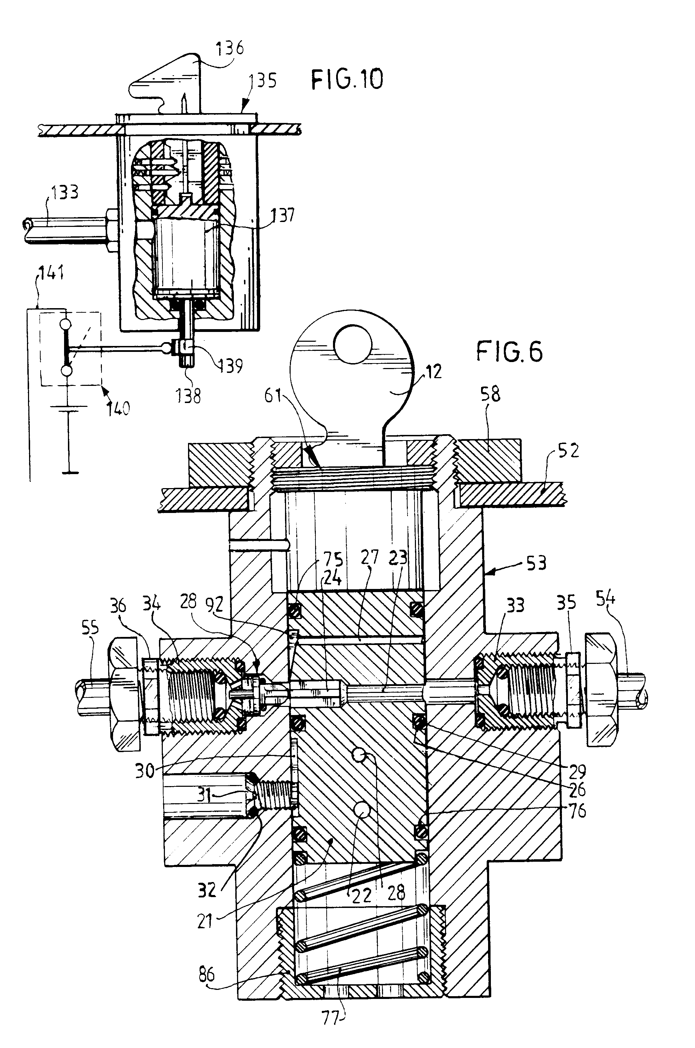

Also the embodiment of fig. 9 can be provided with a line 133 (fig. 10) of braking fluid towards an existing contact key 136 of a contactlock 135 of an automobile at the dashboard, such that if this lock 135 is molested, pressure through line 133 and within chamber 106 will cease to exist and the theft preventing system according to this invention will be automatically closed. As is diagrammatically shown at number 140 this lock 135 can also be connected to all sorts of electrical components of the car, e.g. an existing alarm system, the horn of the automobile and/or the lights of the automobile.

An especially preferred application of the present invention comprising locking lorries of trucks, which are stolen more and more, including valuable goods stored therein. Of course a coupling between the described locking of the brake system and the locking of the storage of a lorry can be made such as to enforce the driver to lock both at the same time.

Of course the described piston can be provided with three or more lockable passages for brake fluidum.

Preferably the housing of the theft preventing system according to this invention will be manufactured from aluminium, so that no corrosion will take place and weight of the system will be no problem.

## Claims

1. Device for preventing theft of a vehicle, comprising means for blocking the passage of brake fluidum in a fluidum line from a brake operating means to at least one brake element provided at at least one wheel of the vehicle, said blocking means comprising at least one valve which operates as non-return valve for the brake fluidum towards said brake wheel element, when a locking element (4) interposed in the fluidum line is moved into a locking position, in which the coupling between said locking element and said valve is disconnected, said locking element being a piston rotably and/or slidably movable in a cylinder provided in a housing, said piston provided with at least one bore for passage of the brake fluidum, characterized in that said valve is seated and sealed, such that leakage does occur in the locked position of the device and in that said piston is provided with a second bore or groove (27), which acts as passage for brake fluidum in the locked position of the piston.

2. Theft preventing device of claim 1, wherein said coupling comprises a pin provided in said bore and provided with grooves for passage of the brake fluidum, said pin in the unlocking position contacting a stem of the non-return valve that is resiliently mounted in a channel in the housing for the brake fluidum.

3. Theft preventing device of claim 1 or 2, wherein said piston is provided in said cylinder with play, such as to allow brake fluidum to pass between said cylinder and said position.

4. Theft preventing device of one or more of the claims 2-3, wherein said valve is mounted in a plug to be screwed in said housing, such as to allow maintenance to take place easily.

5. Theft preventing device of one or more of the claims 2-4, wherein, at least two bores are provided in said piston, one above the other, said piston being in standing position, and said piston is provided with sealings for isolating two different passages for brake fluidum, one from the other, such as to keep two different braking circuits.

6. Theft preventing device of one or more of the claims 2-5, wherein said piston is movable by means of a key of a cilinder lock retained in said housing against a spring, also retained in said housing.

7. Theft preventing device of one or more of the claims 2-5, wherein said piston is movable by means of hydraulic of pneumatic pressure controllable by menas of a control device.

8. Theft preventing device of one or more of the claims 2-5, wherein said piston is movable by electromechanical means.

## Patentansprüche

1. Diebstahlssicherung für ein Fahrzeug mit Mitteln zur Blockierung des Durchtritts eines Bremsmediums in einer Bremsleitung von der Bremsbetätigungsvorrichtung nach wenigstens einem Bremselement, das an wenigstens einem Rad des Fahrzeugs angeordnet ist, wobei die Blockierungsvorrichtung wenigstens ein Ventil aufweist, welches als Rückschlagventil für das Bremsmedium nach dem Radbremselement dient, wenn ein Blockierungselement (4) in die Bremsleitung in Verriegelungsstellung eingeführt wird, wobei die Kupplung zwischen dem Blockierungselement und dem Ventil unterbrochen wird und das Blockierungselement aus einem Kolben besteht, der drehbar und/oder gleitbar in einem Zylinder im Gehäuse beweglich ist, der mit wenigstens einer Bohrung zum Durchtritt des Bremsmediums ausgestattet ist,
dadurch **gekennzeichnet,**
daß das Ventil in der Weise angeordnet und abgedichtet ist, daß ein Leckstrom in Verriegelungsstellung der Vorrichtung auftritt und daß der Kolben mit einer zweiten Bohrung oder Nut (27) versehen ist, die als Kanal für das Bremsmedium in der Blockierungsstellung des Kolbens dient.

2. Diebstahlssicherung nach Anspruch 1, bei welcher die Kopplung aus einem Stift besteht, der in der Bohrung angeordnet und mit Nuten zum Durchtritt des Bremsmediums versehen ist, wobei der Stift in der Freigabestellung einen Ventilstößel des Rückschlagventils betätigt, das federnd in einem Kanal des Gehäuses für das Bremsmedium gelagert ist.

3. Diebstahlssicherung nach den Ansprüchen 1 oder 2, bei welcher der Kolben in dem Zylinder mit Spiel derart gelagert ist, daß das Bremsmedium zwischen Zylinder und Kolben hindurchtreten kann.

4. Diebstahlssicherung nach einem oder mehreren der Ansprüche 2 bis 3, bei welcher das Ventil in einem Stopfen angeordnet ist, der in das Gehäuse derart einschraubbar ist, daß eine einfache Wartung möglich wird.

5. Diebstahlssicherung nach einem der Ansprüche 2 bis 4, bei welcher wenigstens zwei Bohrungen in dem Kolben übereinander vorgesehen sind und der Kolben stehend angeordnet und mit Dichtungen versehen ist, um zwei verschiedene Kanäle für das Bremsmedium gegeneinander abzusperren, derart, daß zwei verschiedene Bremskreise aufrechterhalten werden.

6. Diebstahlssicherung nach einem oder mehreren der Ansprüche 2 bis 5, bei welcher der Kolben mittels eines Schlüssels eines Zylinderschlosses in dem Gehäuse gegen eine Feder beweglich ist, die ebenfalls im Gehäuse angeordnet ist.

7. Diebstahlssicherung nach einem oder mehreren der Ansprüche 2 bis 5, bei welcher der Kolben durch Hydraulikoder Pneumatikdruck beweglich ist, der mittels einer Steuervorrichtung steuerbar ist.

8. Diebstahlssicherung nach einem oder mehreren der Ansprüche 2 bis 5, bei welcher der Kolben durch elektromechanische Mittel beweglich ist.

**Revendications**

1. Dispositif anti-vol pour véhicules, comprenant des moyens pour bloquer le passage du fluide de frein dans une canalisation de fluide à partir d' un moyen d'actionnement du frein jusqu'au moins un élément formant frein prévu au niveau d'au moins une roue du véhicule, lesdits moyens de blocage comprenant au moins un clapet qui fonctionne comme un clapet de non retour du fluide de frein vers ledit élément formant frein de la roue, lorsqu'un élément de verrouillage (4) interposé dans la canalisation de fluide est déplacé pour passer en position de verrouillage, le couplage dans ce dispositif entre ledit élément de verrouillage et ledit clapet étant déconnecté, ledit élément de verrouillage étant un piston pouvant se déplacer par rotation et/ou coulissement dans un cylindre prévu dans un carter, ledit piston étant pourvu d'au moins un alésage prévu pour le passage du fluide de frein, caractérisé en ce que ledit clapet est mis en place et que son étanchéité est assurée, de telle sorte qu'en position de verrouillage du dispositif, une faible quantité de liquide peut s'écouler et en ce que ledit piston est pourvu d'un deuxième alésage ou rainure (27) qui sert de passage au fluide de frein lorsque le piston est en position verrouillée.

2. Dispositif anti-vol selon la revendication 1, caractérisé en ce que ledit couplage comprend une cheville prévue dans ledit alésage et pourvue de rainures pour le passage du fluide de frein, ladite cheville, en position de déverrouillage, venant au contact d'une tige du clapet de non retour qui est montée de manière élastique dans un canal ménagé dans le carter pour le fluide de frein.

3. Dispositif anti-vol selon la revendication 1 ou 2, caractérisé en ce que ledit piston est prévu dans ledit cylindre avec un jeu, de manière à laisser passer le fluide de frein entre ledit cylindre et ladite position.

4. Dispositif anti-vol selon l'une quelconque des revendications 2-3, caractérisé en ce que ledit clapet est monté dans un tampon devant être vissé dans ledit carter, afin de faciliter la réalisation des opérations de maintenance.

5. Dispositif anti-vol selon l'une quelconque des revendications 2-4, caractérisé en ce qu'au moins deux alésages sont prévus dans ledit piston, l'un audessus de l'autre, ledit piston étant dans une position verticale, et en ce que ledit piston est pourvu de joints d'étanchéité pour isoler l'un de l'autre deux passages différents prévus pour le liquide frein, de manière à maintenir deux circuits de freinage différents.

6. Dispositif anti-vol selon l'une quelconque des revendications 2-5, caractérisé en ce que ledit piston peut se déplacer au moyen d'une clé d'une serrure cylindrique maintenue dans ledit carter en s'opposant à l'action d'un ressort, également maintenu dans ledit carter.

7. Dispositif anti-vol selon l'une quelconque des revendications 2-5, caractérisé en ce que ledit piston peut être déplacé par des moyens hydrauliques ou pneumatiques pouvant être contrôlés au moyen d'un dispositif de commande.

8. Dispositif anti-vol selon l'une quelconque des revendications 2-5, caractérisé en ce que ledit piston peut être déplacé par des moyens électromécaniques.

FIG.1

FIG.2

EP 0 253 431 B1

FIG.3

FIG.4

8

FIG. 5

FIG.7

FIG:8

FIG.9

EP 0 253 431 B1

FIG.10

FIG.6

12